# EUROPEAN PATENT SPECIFICATION

(11) **EP 1 491 287 B1**
(45) Date of publication and mention of the grant of the patent: **02.12.2009**
(21) Application number: 03743888.4
(22) Date of filing: 12.03.2003
(51) Int. Cl.: B23Q 17/22, G01B 21/04

(54) **SELF-CENTRING SENSING DEVICE**
SELBSTZENTRIERENDE ERFASSUNGSVORRICHTUNG
PALPEUR A CENTRAGE AUTOMATIQUE

(30) Priority: 13.03.2002 ES 200200597
(43) Date of publication of application: 29.12.2004
(60) Divisional application: 09151334.1
(73) Proprietor: IBS Precision Engineering B.V., 5633 AD Einhoven (NL)
(72) Inventor: TRAPET, Eugen, Universidad De Zaragoza, 50015 Zaragoza (ES); AGUILAR MARTIN, Juan, J., Universidad de Zaragoza, 50015 Zaragoza (ES); SPAAN, Henny,, NL-5741 HK Beek en Donk (NL)
(74) Representative: Van den Heuvel, Henricus Theodorus
(86) International application number: PCT/ES2003/000110
(87) International publication number: WO 2003/076130

(56) References cited:
- DE-U- 29 618 726
- DE-U- 29 916 325

## Description

The invention relates to a three-dimensional self-centring sensing device, based on a parallel kinematics design, for analysing relative movement errors among machine components, using spheres, and for analysing positioning errors of machines in comparison to sphere reference objects.

### Antecedents

Reference objects do exist and are in use in the form of plates of balls and bars of balls for checking the positioning of coordinate measuring machines (CMs). They are very economical when used in CMs. These objects cannot be used for checking tool machines (TMs) in the majority of cases, either because they lack a sensing device or, in many TMs, the appropriate measuring software. These problems are solved by using the invention herein, that is, with the development of a specific sensing device for TM positioning tests.

The German Offenlegungsschrift DE 199 44 429 describes a device for obtaining correction parameters for tool coordinates of CNC-controlled production machines, including a measuring head with a measuring sphere that can be placed in the tool holder of the production machine. The device also includes a measurement-head to be coupled with the machine table, machine bed or the like, which measuring head has three linear displaceable tentacles for contacting the measuring sphere. The measuring tentacles as disclosed are oriented in different directions and are each displaceable in longitudinal direction to realise length variations of the measuring tentacles that provide thus three measuring signals. To obtain relative movement errors and correction parameters for CNC-controlled production machines with high accuracy, the construction of the holder of the three tentacles is less suited; the accuracy of the measurements with the disclosed device is limited. Furthermore, the device disclosed in DE 199 44 429 is different from the invention, as the invention relates to a device for analysing relative movement errors among components of the machine itself.

### Problems and Functions

The basic concept of tool machine (TM) positioning error tests with reference objects is that the tool is replaced by a sensing device, the tool machine (TM) is programmed to move the axles to defined positions thus placing the sensing device in contact with the reference spheres or other reference elements in the reference object (this document deals only with reference spheres).

However, there are several problems that prevent the prior art type of sensing devices of coordinate measuring machines (CMs) being used. In most cases it will not be possible to use a dynamic sensing device as is very common in CMs. This sensing device gives a pulse - when it touches the object - to read the position counters of the coordinate measuring machine (CM). Its use is not possible or is not comfortable due to the lack of connection to the numeric control for the sensing device signal and dynamic measurements with continuous moving axes are not possible.

For the tests it is appropriate to have a sensing device that indicated deviation in X, Y, Z simultaneously, for each programmed position in which the sensing device is in contact with a reference sphere in a reference object like a bar of balls. Thus it would be easily programmed and the programmes would be executed quickly, and it would not even be necessary to connect the computer or the sensing device to the numeric control of the TM. All of this is possible with a self-centring sensing device. This type of sensing device enables obtaining, at the same time, the position error in three coordinates when the TM with this sensing device is placed over a reference sphere of a bar of balls or the equivalent. The positions programmed should correspond to the true (calibrated) positions of the centres of the reference spheres of the bar of balls; if they do not correspond, deviations from the programmed values to the calibrated values must be taken into account.

Sensing devices for CMs allow assembling self-centring sensing device tips in the form of three balls or a cone carried by linear movable rods.

### Solution according to the invention

Bearing in mind that it is not necessary to measure either any type of surface or any type of typography, as the objects are always going to be spheres of extreme hardness, low roughness and low shape error, the self-centring sensing device system is open to simplification and being made more suitable for the task of self-centring in reference spheres with positions relatively far from the self-centring sensing device positions.
For this reason, a new and inventive self-centring sensing device according to claim 1 is provided. In this case stable measurement is taken directly on the surface of the reference sphere by the at least three systems of one-dimensional measuring systems that make up the three-dimensional self-centring sensing device. The self-centring sensing device according the invention is providing correct measurements without dictating rigidly the direction of approaching the sphere reference objects; also approaching a sphere reference object along an approaching path that is not directed to the centre of a sphere reference object the self centring device according the invention is able to compensate such an approach.

According to this invention, the self-centring sensing device contains the following components:
- at least three sensing device tips that are in contact with the reference sphere, with typically spherical, flat or cylindrical surfaces - alternatives not being restricted to these shapes; the tips of the sensing device should be of high precision and the geometry must be recognised,
- each tip of the sensing device is fixed on a rod that moves when the self-centring sensing device centres itself on a reference sphere; the movement is linear,
- the rods are guided with high precision so that they execute a linear movement when they come into contact and self-centre on a reference sphere,
- such movements should be in different directions in order to touch the reference sphere at points that are far enough away from each other,
- in order to maintain contact with the reference sphere, pre-tensioned springs, pneumatic or hydraulic elements, or other elements that serve the same purpose, push the rods in the direction of the reference sphere; if there is no reference sphere in the measuring rank of the self-centring sensing device, mechanical buffers limit the movement of the rod,
- the motion of each rod is measured by a linear displacement sensor; if the displacement sensor is an optical incremental sensor - without restricting the invention to this type of sensor - the reading ruler is normally placed on the rod and the fixed reading head on the body of the self-centring sensing device,
- each rod is independently moveable connected to a truncated cone-shaped body of the self-centring sensing device, for accurate measuring the position and orientation of the movable rods,
- the minimum of three displacements measured is transferred to a computer programme where the position of the self-centring sensing device is calculated in relation to the reference sphere that it is sensing, taking into account the displacement values and the model of the geometry of the self-centring sensing device components,
- the said calculation of the position of the self-centring sensing device in relation to the reference sphere requires knowing on the one hand the values indicated by the displacement sensors and on the other the parameters that describe with great accuracy the geometry of the self-centring sensing device; in other words: position and orientation of each of the elements; these parameters are called "parameters of the model" of the self-centring sensing device.

The German Offenlegungsschrift DE 100 18 214 describes a device for measuring machines, having a ground-body with one or a plurality of measurement devices on it, lacking the feature of having at least three rods able to move independently in different directions.

The publication "Wie Genau arbeiten Automaten" from "Roboter" of February 1992 discloses in the drawing on its title-page two 3-D-Messkopfe, and in the text on the same page the use of a reference model.

The German Offenlegungsschrift DE 195 01 094 describes a device and method for calibrating of movement-devices, making use of at least one measurement-sphere, and at least one distance-sensor. Several measurements from various angles have to be made with the at least one distance-sensor.

Other prior art sensing devices are disclosed in the German Gebrauchsmusterschrift DE 296 18 726 and the German Gebrauchsmusterschrift DE 299 16 325.

The said model depends on the way in which the self-centring sensing device is made and it depends on the precision that one wishes to obtain (more parameters may be necessary if a greater degree of accuracy is required):

For the creation of a self-centring sensing device with linearly movable rods, the basic parameters are as follows:
- coordinates X, Y, Z of the centre of the tip of the sensing device
- orientation of the normal vector of the plane of the tip of the sensing device j, q
- orientation of the rod axle j, q
   In total there are 21 parameters plus the diameter of the reference sphere

The invention offers the following three alternatives in order to obtain a high degree of accuracy of the values of the parameters of the model:
1. measure them directly with an independent measuring system such as a CM
2. measure them indirectly, placing the sensing device in contact with a reference sphere and - maintaining the contact between the reference sphere and the self-centring sensing device - moving the sensing device or the reference sphere to known positions (positions that give different relative displacements between the reference sphere and the self-centring sensing device)
3. measure them indirectly, placing the sensing device in contact with a reference sphere located in a calibration tool as per this invention, always placing the self-centring sensing device in the same position with great precision (or else leaving it in this position without moving it); the said calibration tool is fitted in different ways on its attachment points, thus displacing the reference sphere: the position of the reference sphere is measured with the self-centring sensing device.

### Ad. 1:

Measurement is taken of the orientation of the linear movable rods (11), the orientations of the tips of the sensing device (12) and the X, Y, Z coordinates of the point of intersection of the rod axle with the plane of contact of the sensing device tip.

Measurement is also taken of the centre of the sensing device tip (12) and its diameter (all the tips of the sensing device should be of the same diameter). Another alternative for measuring the parameters of the model of the sensing device is to directly establish the relationship between the positions of the tips of the sensing device and the values indicated by the sensors, generating a correspondence table. This is done with a CM. The correspondence table is inserted when the self-centring sensing device is used to perform real measuring.

### Ad 2.

The second alternative according to the invention is to move the sensing device with a specific CM or TM over a number of known positions, while the tips of the sensing device are in contact with a reference sphere. The values indicated by the sensors and the positions of the self-centring sensing device are recorded. This method also enables checking a self-centring sensing device, calibrated in advance. In order to calculate the parameters of the model, a programme of better parameter adjustment type is used, for example, according to the method of squared minimums (Gauss method) or a programme of better parameter adjustment according to the Simplex method.

### Ad 3.

According to the invention, the third alternative is to substitute the CM in the above variant by a calibration tool with reference spheres in known positions. With the self centring sensing device maintaining its position or always placed in the same position, the said tool is put into contact with the self-centring sensing device, performing a number of reference sphere positions with the tool. The true positions of the reference spheres and the indications of the sensors are recorded. Procedure as per the previous alternative.

### Description of a realization

Below, a possible realizations is described. Other possible realisations also exist for making a self-centring sensing device. Therefore the invention is not restricted to the realization as described in detail as follows.

### Self-centring sensing device with linear movable rods

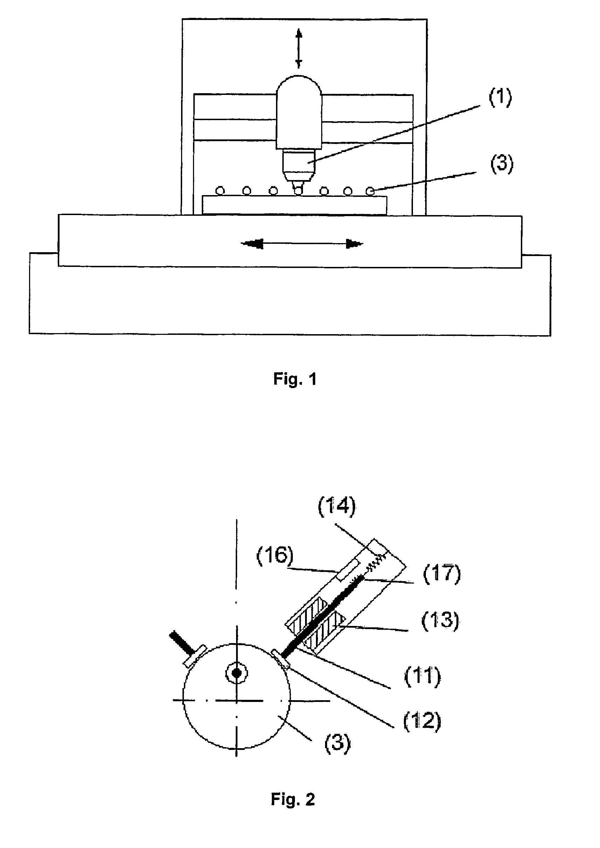

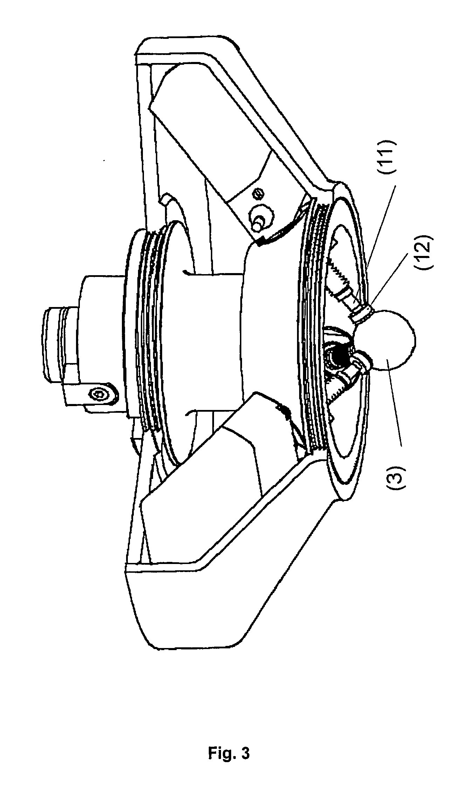

Figure 2 illustrates the working principle and figure 3 the three-dimensional self-centring sensing device with the three linear movable rods (11) connected to the truncated cone-shaped body. This paragraph deals with a self-centring sensing device that comprises three linearly movable cylindrical rods (11) connected to a truncated cone-shaped body, with one flat sensing tip (12) and one linear displacement sensor (16) fixed on each of these rods (11). The movement axles of the rods (11) ideally have 90° angles between them and the axles fictitiously intersect at a point on the outside of the self-centring sensing device body. This point is more or less the point at which the sensing device will be placed in respect to each reference sphere (3) requiring to be measured. The rods (11), linearly guided by precision guides (13) are pushed by pre-tensioned springs (14) in the direction of the said point. Thus, the sensing device tips (12), which have their contact planes perpendicular to the rods (11), maintain contact with said reference sphere (3) if the latter falls within the measuring rank of the self centring sensing device. The rods (11) carry an optical ruler (17) that forms part of a displacement sensor (16) for measuring the rod (11) positions. A reading head (16) set in the self-centring sensing device body forms the other part of this sensor (16, 17). The invention is not dependent on the type of displacement sensor (16, 17). If there is no sphere (3) in the measuring rank, the rods (11) find themselves positioned at their limit, as defined by a mechanical buffer. This outer limit represents position ZERO of the rod (11), at which the counters of the displacement sensor (16, 17) begin.

### Industrial application

There are several industrial applications for the invention; the most important of them being: checking positioning errors of tool machines (TMs) or of coordinate measuring machines (CMs), using bars of balls placed in directions of the movement axles or also in diagonal ones and using the self-centring sensing device to measure the displacements between the programmed positions and the known positions (calibrated) of the reference sphere of the bar (figure 1).

The test described, performed with the self-centring sensing device according to the invention, is economical. The reason for this is because three coordinates are measured at once. Measuring with this sensing device according to the invention is also more accurate.

### Brief description of the drawings

Figure 1: Use of the self-centring sensing device in a milling machine, comparing programmed positions with calibrated positions of the spheres of a bar of balls (2).
Figure 2: Diagram of a realization of a self-centring sensing device, with linear rods (11) according the prior art provided with; flat sensing device tips (12), rods guides (13), and pre-tensioned spring (14) for moving the rod with its flat sensing device tip (15) against the reference sphere (3), the position of the rod being measured with a linear displacement sensor, comprising a reading head (16) and an optical reading ruler (17).
Figure 3: Three-dimensional self-centring sensing device according the present invention provided with plural linear rods as showed in figure 2, the linear rods being independently moveable connected to a truncated cone shaped body.

## Claims

1. Three-dimensional self-centring sensing device for analysing relative movement errors among machine components, using spheres (3, 33), and for analysing positioning errors of machines in comparison to sphere reference objects (3, 33);
• having at least three rods (11) able to move independently in different directions, each rod (11) having a sensing device tip (12) with which it keeps in constant contact with the object (3, 33), owing to springs (14) or other elements that generate the required force for pushing the rod (11) in the direction in which contact with the object (3, 33) is being performed; and
• displacement sensors (16, 17) for measuring the position of each rod (11),
**characterised in that** the rods (11) are independently moveable connected to a truncated cone shaped body of the self-centring sensing device.

2. Self-centring sensing device as in claim 1, **characterized in that** each of the at least three rods (11) has a spherical, or cylindrical or flat sensing device tip (12), these rods (11) also being able to move freely along their linear guides (13).

3. Self-centring sensing device as per claim 2, **characterised by** a model with at least one of the following parameters:
• the positions of said sensing device tips (12);
• the orientations of said sensing device tips (12);
• the positions of said rods (11);
• the orientations of said rods (11);
• the positions of said displacement sensors (16, 17); and
• the orientations of said displacement sensors (16, 17),
which parameters are stored in a computer for calculating relative displacements of the reference sphere (3, 33) in relation to the self-centring sensing device on the basis of the positions measured by said displacement sensors (16, 17).

## Patentansprüche

1. Dreidimensionale selbstzentrierende Erfassungsvorrichtung zur Analyse von relativen Bewegungsfehlern bei Maschinenbauteilen unter Verwendung von Kugeln (3, 33) und zum Analysieren von Positionierfehlern von Maschinen im Vergleich zu Referenzkugelobjekten (3, 33);
• die mindestens drei Stangen (11) besitzt, die unabhängig voneinander in unterschiedliche Richtungen bewegen können, wobei jede Stange (11) eine Messfühlerspitze (12) hat, mit der sie in ständigem Kontakt mit dem Objekt (3, 33) steht, aufgrund von Federn (14) oder anderen Elementen, welche die erforderliche Kraft aufbringen, um die Stange (11) in die Richtung zu drücken, in der der Kontakt mit dem Objekt (3, 33) erfolgt; und
• Wegaufnehmer (16, 17) zur Messung der Position jeder Stange (11),
**dadurch gekennzeichnet, dass** die Stangen (11) frei beweglich mit einem kegelstumpfförmigen Körper der selbstzentrierenden Erfassungsvorrichtung verbunden sind.

2. Selbstzentrierende Erfassungsvorrichtung nach Anspruch 1, **dadurch gekennzeichnet, dass** jede der mindestens drei Stangen (11) eine kugel- zylinder- oder abgeflachte Messfühlerspitze (12) hat, und dass diese Stangen auch entlang ihrer linearen Führungen (13) frei beweglich sind.

3. Selbstzentrierende Erfassungsvorrichtung nach Anspruch 2, **gekennzeichnet durch** ein Modell mit mindestens einem der folgenden Parameter:
• die Position der besagten Messfühlerspitzen (12);
• die Ausrichtung der besagten Messfühlerspitzen (12);
• die Position der besagten Stangen (11);
• die Ausrichtung der besagten Stangen (11);
• die Position der besagten Wegaufnehmer (16, 17); und
• die Ausrichtung der besagten Wegaufnehmer (16, 17),
welche Parameter in einem Computer für die Berechnung der relativen Verschiebungen der Referenzkugel (3, 33) in Bezug auf die selbstzentrierende Erfassungsvorrichtung basierend auf den von besagten Wegaufnehmem (16, 17) gemessenen Positionen gespeichert werden.

## Revendications

1. Palpeur tridimensionnel à centrage automatique pour analyser les erreurs de mouvement relatif parmi des composants de machine, en utilisant des sphères (3, 33), et pour analyser les erreurs de positionnement de machines par comparaison avec des objets de référence sphériques (3, 33) ;
• comportant au moins trois tiges (11) capables de bouger indépendamment dans des directions différentes, chaque tige (11) comportant une pointe de palpeur (12) avec laquelle elle reste constamment en contact avec l'objet (3, 33), grâce des ressorts (14) ou à d'autres éléments qui produisent la force requise pour pousser la tige (11) dans la direction dans laquelle le contact avec l'objet (3, 33) est réalisé, et
• des capteurs de déplacement (16, 17) pour mesurer la position de chaque tige (11), **caractérisé en ce que** les tiges (11) sont reliées à déplacement indépendant à un corps en forme de cône tronqué du palpeur à centrage automatique.

2. Palpeur à centrage automatique selon la revendication 1, **caractérisé en ce que** chacune des au moins trois tiges (11) comporte une pointe de palpeur sphérique ou cylindrique ou plate (12), ces tiges (11) étant aussi capables de bouger librement le long de leurs guides linéaires (13).

3. Palpeur à centrage automatique selon la revendication 2, **caractérisé par** un modèle comportant au moins l'un des paramètres suivants :
• les positions desdites pointes de palpeur (12) ;
• les orientations desdites pointes de palpeur (12) ;
• les positions desdites tiges (11) ;
• les orientations desdites tiges (11) ;
• les positions desdits capteurs de déplacement (16, 17), et
• les orientations desdits capteurs de déplacement (16, 17),
lesquels paramètres sont stockés dans un ordinateur pour calculer les déplacements relatifs de la sphère de référence (3, 33) par rapport au palpeur à centrage automatique sur la base des positions mesurées par lesdits capteurs de déplacement (16, 17).
